Europäisches Patentamt

European Patent Office

Office européen des brevets

(19)

(11) Veröffentlichungsnummer: **0 244 351**
**B1**

(12) **EUROPÄISCHE PATENTSCHRIFT**

(45) Veröffentlichungstag der Patentschrift:
**02.11.89**

(21) Anmeldenummer: **87810182.3**

(22) Anmeldetag: **30.03.87**

(51) Int. Cl.⁴: **E03F 5/10,** F16C 35/00,
B08B 9/08

(54) **Lageranordnung für eine Spülkippe.**

(30) Priorität: **22.04.86 CH 1639/86**

(43) Veröffentlichungstag der Anmeldung:
**04.11.87 Patentblatt 87/45**

(45) Bekanntmachung des Hinweises auf die Patenterteilung:
**02.11.89 Patentblatt 89/44**

(84) Benannte Vertragsstaaten:
**AT CH DE FR LI**

(56) Entgegenhaltungen:
**EP-A- 0 086 749**
**EP-A- 0 152 638**
**DE-A- 3 121 520**
**DE-A- 3 418 713**
**US-A- 3 504 954**
**US-A- 4 560 290**

(73) Patentinhaber: **Nill, Werner, Eigenheimweg 45,
CH-8400 Winterthur(CH)**

(72) Erfinder: **Nill, Werner, Eigenheimweg 45,
CH-8400 Winterthur(CH)**

(74) Vertreter: **Gachnang, Hans Rudolf, Patentanwalt H.R.
Gachnang Badstrasse 5, CH-8500 Frauenfeld(CH)**

ACTORUM AG

## Beschreibung

Gegenstand der Erfindung ist eine Lageranordnung für eine Spülkippe gemäss Oberbegriff des Patentanspruches 1.

Lageranordnungen für Spülkippen der genannten Gattung sind bekannt.

Aus der DE-A1-3121520 ist eine Spülkippe bekannt, die mittels zwei seitlich der Spülkippe angeordneten und an der Decke des Abwasserbehälters verschraubten Trägern schwenkbar befestigt ist. Der Drehpunkt für die Spülkippe muss am äussersten Ende der Träger angeordnet sein, damit die Spülkippe, wenn sie mit Wasser gefüllt ist, im Uhrzeigersinn kippen kann. Durch einen Anschlag an den Trägern wird die Kippe beim Füllen in horizontaler Lage gehalten. Sobald die Kippe mit Wasser gefüllt ist, schwenkt sie in Uhrzeigersinn und schlägt mit einem zweiten, am Boden der Kippe angebrachten Gummipuffer an der Decke des Abwasserbehälters auf. Dabei wirken grosse Biegemomente auf den Träger.

Es ist auch bekannt, als Ausleger ausgebildete Träger an der vertikalen Wand des Abwasserbehälters zu befestigen. Dabei werden die Träger auf Zug und auf Biegung belastet, und zwar nicht nur, wenn die Spülkippe schwenkt und am Anschlag anschlägt, sondern dauernd durch deren Eigengewicht.

Die beiden Befestigungsarten fur Spülkippen haben den Nachteil, dass die Montage der doch sehr schweren Spülkippe an den Trägern sehr schwierig ist, da in den engen Abwasserbehältern wenig Raum und nur behelfsmässig Hebemittel einsetzbar sind. Zudem ist bereits das Versetzen der Träger äusserst schwierig, da, im Gegensatz zu den genauen Abmessungen der Spülkippe, bauseits selten günstigen Voraussetzungen vorliegen, die Träger exakt im geforderten Abstand anzubringen, damit die Spülkippe einerseits genau horizontal zu liegen kommt und andererseits der Abstand der beiden Träger exakt dem Abstand der Achsstummel an der Spülkippe entspricht.

Die Aufgabe der vorliegenden Erfindung besteht nun darin, eine Lagerung für Spülkippen zu schaffen, welche die Nachteile der bekannten Lagerungen vermeidet.

Insbesondere besteht die Aufgabe der Erfindung darin, eine Lageranordnung zu schaffen, welche auf einfache Weise anzubringen ist, und welche durch die Kräfte beim Schwenken der Spülkippe und deren Aufschlagen in den beiden Endlagen keinen Schaden erleiden kann.

Die Aufgabe wird erfindungsgemäss durch die kennzeichnenden Merkmale des Patentanspruches 1 gelöst.

Weitere vorteilhafte Ausgestaltungen der Erfindung sind in den abhängigen Ansprüchen beschrieben.

Die erfindungsgemässen Lagerungen ermöglichen eine sehr einfache Montage an den Seitenwänden des Abwasserbehälters und gestatten das Einsetzen oder Einhängen der Spülkippe in die endgültig versetzten Lageranordnungen. Es müssen keine gefährliche Montagearbeiten durchgefuhrt werden, solange die Lageranordnungen noch nicht definitiv an den Seitenwänden des Abwasserbehälters befestigt sind. Die Spülkippe kann nämlich in einfacher Art und Weise auf die Auflagefläche der Lageranordnung aufgelegt, anschliessend durch gesicherte Unterlagscheiben ausgerichtet (nivelliert) und mit je einer Schraube gesichert werden. Massungenauigkeiten sowohl am Abwasserbehälter als auch an der Spühlkippe werden durch die schlitzförmigen Bohrungen in der Auflagefläche oder durch die verstellbaren Anschläge (Puffer) ausgeglichen.

Anhand eines illustrierten Ausführungsbeispieles wird die Erfindung näher erläutert. Es zeigen:

Figur 1 eine Darstellung eines Abwasserbehälters mit einer darin angeordneten Spülkippe (in schematischer Darstellung),

Figur 2 einen Querschnitt durch den Abwasserbehälter längs Linie II -II,

Figur 3 eine perspektivische Darstellung einer Lagerung mit einem Lagergehäuse, verstellbaren Anschlägen dem Sicherungsnocken und der Unterlagscheibe und

Figur 4 einen Querschnitt durch eine Lagerung längs Linie IV - IV.

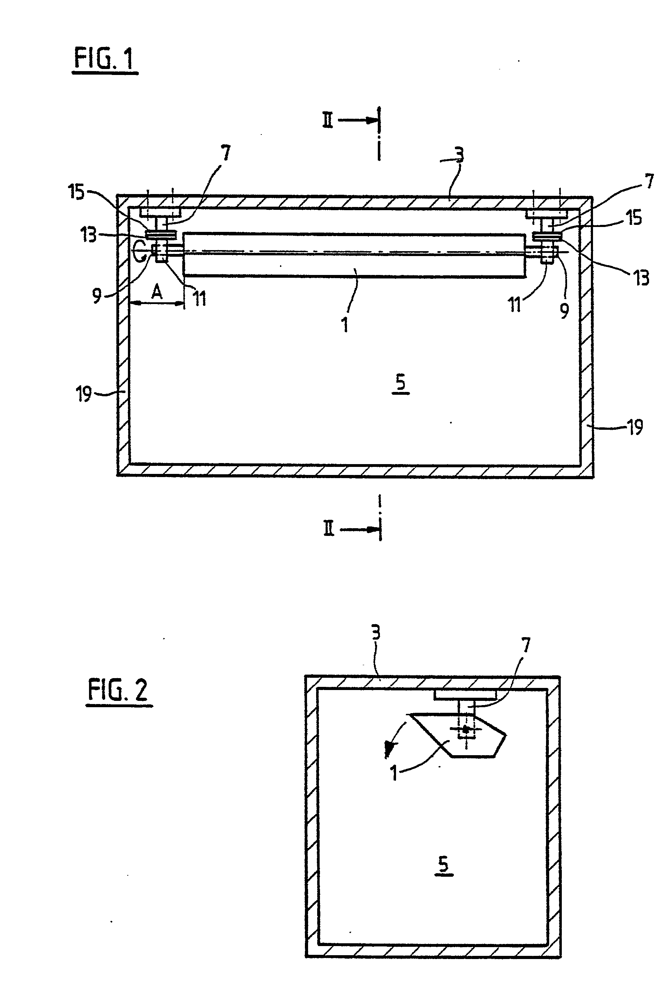

Die in den Figuren 1 und 2 gezeigte Spülkippe 1 ist in herkömmlicher Weise an zwei seitlich der Spülkippe 1 angeordneten, an der Decke 3 des Abwasserbehälters 5 angeschraubten Trägern 7 befestigt. Die an der Spülkippe 1 seitlich angebrachten, die Schwenkachse C bildenden Achsstummel 9 sind in Lagergehäusen 11 mittels Kugellagern drehbar gelagert. Die Lagergehäuse 11 sind mittels Flanschen 13 an entsprechende Flanschen 15 an den unteren Enden der Träger 7 angeschraubt. Zum Verbinden der Flanschen 13 und 15 muss bei der Montage der Spülkippe 1 seitlich der Träger bzw. der Spülkippe 1 stets genügend Abstand A zur Wand 19 vorgesehen werden. Die Spülkippe 1 kann dadurch nur einen Teil der Breite des Abwasserbehälters 5 abdecken; die seitlichen Bereiche sind dadurch vom Spülvorgang ausgeschlossen.

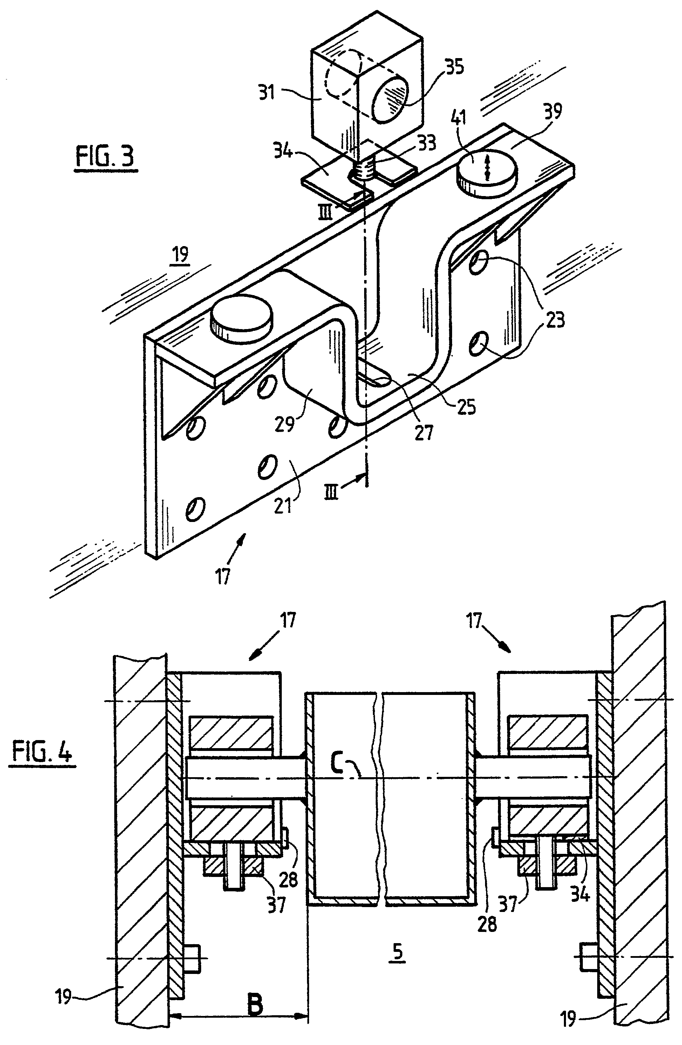

Die Lageranordnungen 17 gemäss der Erfindung, wie sie in den Figuren 3 und 4 dargestellt sind, werden an den Seitenwänden 19 des Abwasserbehälters 5 angeschraubt. Jede Lageranordnung 17 besteht aus einer Grundplatte 21 mit einer Anzahl Befestigungslöchern 23 und einem im Zentrum der Grundplatte 21 angeordneten Auflageplatte 25 mit einer als Schlitz ausgeführten Bohrung 27. Die Auflageplatte 25 liegt lotrecht zur Grundplatte 21 und horizontal. Sie weist vorne einen über die Auflageplatte 25 hinausragenden Sicherungsnocken 28 auf. Zur Aufnahme der auf die Aufnahmeplatte 25 einwirkenden Kräfte ist diese durch senkrecht stehende plattenförmige Verstrebungen 29 mit der Grundplatte 21 fest verbunden. Die Verstrebungen 29 können selbstverständlich nicht nur oberhalb der Tragplatte 25 angeordnet sein, sondern sie können auch - auf Druck belastet - unterhalb derselben mit der Grundplatte 21 verschweisst sein. Sie sind bei dieser Ausführungsform nicht aus einem Stück mit der Aufnahmeplatte 25 hergestellt. Die Aufnahmeplatte 25 ist derart dimensioniert, dass ein Lagergehäuse 31 mit einem Gewindebolzen 33, der durch den Bohrung 27 hindurchreicht, auf die Aufnahmeplatte 25 aufgesetzt wird.

Zwischen die Aufnahmeplatte 25 und das Lagergehäuse 31 kann eine Unterlagscheibe 34 zum Nivellieren eingelegt werden. Die Unterlagscheibe 34 kann ringförmig oder u-förmig ausgebildet sein. Die u-förmige Ausbildung ermöglicht das Einlegen auch dann noch, wenn der Gewindebolzen 33 bereits teilweise in die Bohrung 27 eingefuhrt ist.

Das Lagergehäuse 31 ist im wesentlichen als Quader ausgebildet, durch den im Zentrum eine Bohrung 35 zur Aufnahme eines Kugeloder Gleitlagers angebracht ist. In die Bohrung 35 bzw. das darin eingesetzte Wälz- oder Gleitlager greift der Achsstummel 9 der Spülkippe 1 ein. Das Lagergehäuse 31 entspricht im wesentlichen dem Lagergehäuse 11, wie es in der herkömmlichen Lagerung gemäss Figur 1 und 2 gezeigt worden ist. Anstelle des Flansches 13 tritt die Gewindespindel 33.

Seitlich der senkrecht angeordneten Platten 29 können noch je eine im wesentlichen horizontal angebrachte Platte 39 vorgesehen sein, die einen darauf aufgesetzten Gummi- oder Stahlfederpuffer 41 aufweist. Die Puffer 41 bilden die Anschläge für die beiden Endpositionen der Spülkippe 1. die Puffer 41 sind in der Höhe einund verstellbar, z.B. mittels Gewindebolzen, die in entsprechenden Gewindebohrungen in den Platten 39 angebracht sind.

Die Montage der Lageraordnung 17 und der Spülkippe 1 wird im folgenden näher beschrieben:

Zwei Lageranordnungen 17 werden mittels mehrerer Schrauben in der für die Spülkippe 1 vorgesehenen Höhe an den beiden Seitenwänden 19 des Abwasserbehälters 5 definitiv montiert. Anschliessend wird die Spülkippe 1, an deren Achsstummel 9 die Lagergehäuse 31 bereits aufgesetzt sind, mittels eines Kranes oder eines Hubstaplers in die beiden Lageranordnungen 17 eingelegt. Vom Montagepersonal muss nur darauf geachtet werden, dass die Gewindespindeln 33, die an den Lagerböcken 31 frei pendelnd nach unten hängen, in die Bohrungen 27 eingreifen. Sobald die Spülkippe 1 mit den Lagergehäusen 31 auf den Auflageflächen 25 der Lageranordnungen 17 aufliegen, ist die Spülkippe 1 absturzsicher befestigt. Durch Einlegen von Unterlagscheiben 34 kann die Spühlkippe 1 definitiv nivelliert werden. Zur weiteren Sicherung werden die Lagergehäuse 31 mittels Muttern 37 von unten an den Auflageflächen 25 festgeschraubt.

Die sich durch die bauseits ergebenden Ungenauigkeiten der Abstände, die Nichtparallelität der beiden Seitenwände 19 und Montageungenauigkeiten der Lageranordnungen werden durch die Bohrungen 27 und die drehbar in den Bohrungen 27 angeordneten Lagergehäuse 31 aufgenommen. Es ist überhaupt nicht notwendig, irgendwelche Anpassungsarbeiten und Justierungen der Spülkippe 1 bzw. deren Lageranordnungen bei und nach der Montage vorzunehmen. Die Ausrichtung erfolgt beim Einsetzen von selbst.

Der Abstand B der Spülkippe 1 von der Wand 19 ist sehr viel geringer als der Abstand A.

**Patentansprüche**

1. Lageranordnung (17) für eine Spülkippe (1) in einem Abwasserbehälter mit je einem seitlich der Spülkippe am Achsstummel (9) in der Schwenkachse aufgesetzten Lagergehäuse (31) mit einem Wälz- oder Gleitlager, dadurch gekennzeichnet, dass die Lageranordnung (17) aus einer horizontal liegenden, an einer Seitenwand (19) des Abwasserbehälters (5) befestigbaren Aufnahmeplatte (25) mit einer schlitzförmigen Bohrung (27) besteht.

2. Lageranordnung nach Anspruch 1, dadurch gekennzeichnet, dass die schlitzförmige Bohrung (27) senkrecht zur Wand (19) angeordnet ist.

3. Lageranordnung nach einem der Ansprüche 1 oder 2, dadurch gekennzeichnet, dass seitlich der Aufnahmeplatte (25) je eine als Anschlag für die Lagergehäuse (31) dienende Platte (29) angebracht ist.

4. Lageranordnung nach Anspruch 3, dadurch gekennzeichnet, dass die Platte (29) als Verstrebung für die Aufnahmeplatte (25) ausgebildet ist.

5. Lageranordnung nach einem der Ansprüche 1 bis 4, dadurch gekennzeichnet, dass seitlich der im wesentlichen senkrecht angebrachten Platten (29) eine horizontal liegende Platte (39) mit je einem darauf aufgesetzten Gummi- oder Federstahlpuffer (41) anschliesst.

6. Lageranordnung nach Anspruch 5, dadurch gekennzeichnet, dass die Grundplatte (21) ein oder mehrere Befestigungslöcher (23) zur Befestigung an einer Wand (19) aufweist.

7. Lageranordnung nach einem der vorangehenden Ansprüche, dadurch gekennzeichnet, dass an der Aufnahmeplatte (25) ein Sicherungsnocken (28) zur Sicherung einer aufgelegten Unterlagscheibe (34) angebracht ist

8. Lageranordnung nach einem der Ansprüche 5 bis 7, dadurch gekennzeichnet, dass die Puffer (41) in der Höhe ein- und verstellbar sind.

**Claims**

1. Mounting arrangement (17) for a tipping flushing vessel (1) in a sewage vessel, having a respective bearing housing (31), which is mounted laterally of the tipping flushing vessel on the axle journal (9) along the pivot axis and is provided with an antifriction bearing or a friction bearing, characterised in that the mounting arrangement (17) comprises a horizontally disposed supporting plate (25), which is securable on a lateral wall (19) of the sewage vessel (5) and is provided with a slot-like bore (27).

2. Mounting arrangement according to claim 1, characterised in that the slot-like bore (27) is perpendicularly disposed relative to the wall (19).

3. Mounting arrangement according to one of claims 1 or 2, characterised in that a respective plate (29), which serves as a stop member for the bearing housing (31), is mounted laterally of the supporting plate (25).

4. Mounting arrangement according to claim 3, characterised in that the plate (29) is a reinforcing member for the supporting plate (25).

5. Mounting arrangement according to any of claims 1 to 4, characterised in that a horizontally disposed plate (39) communicates with a respective rubber or spring steel buffer (41), mounted thereon, laterally of the plates (29) which are mounted substantially perpendicularly.

6. Mounting arrangement according to claim 5, characterised in that the base plate (21) has one or more securing holes (23) for securement on a wall (19).

7. Mounting arrangement according to any of the preceding claims, characterised in that a locking cam (28) is mounted on the supporting plate (25) for the fastening of a washer (34) provided thereon.

8. Mounting arrangement according to any of claims 5 to 7, characterised in that the buffers (41) are vertically adjustable and displaceable.

## Revendications

1. Dispositif de paliers de suspension (17) pour un bac basculant de chasse d'eau (1) dans un réservoir d'eaux usées, comportant de chaque côté du bac basculant un bloc de logement (31) pour un palier de roulement ou de glissement, dans lequel vient se monter un tourillon axial (9) du bac, caractérisé en ce que le dispositif de paliers (17) comporte de chaque côté une plaque support (25), prévue pour être fixée à une paroi latérale (19) du réservoir d'eaux usées (5), et disposée horizontalement en position de service, cette plaque support étant pourvue d'une échancrure en forme de fente (27).

2. Dispositif de paliers selon le revendication 1, caractérisé en ce que l'échancrure en forme de fente (27) est orientée perpendiculairement à la paroi correspondante (19) du réservoir.

3. Dispositif de paliers selon l'une des revendications 1 et 2, caractérisé en ce qu'il comporte sur le côté de chaque plaque support (25) une plaque auxiliaire (29) servant de butée pour le bloc de logement (31) du palier correspondant.

4. Dispositif de paliers selon la revendication 3, caractérisé en ce que la plaque auxiliaire (29) constitue un élément de soutien de la plaque support (25).

5. Dispositif de paliers selon l'une des revendications 1 à 4, caractérisé en ce qu'il comporte sur le côté de chacune des plaques auxiliaires (29), sensiblement verticales en position de service, une plaque d'appui (39) disposée horizontalement, raccordée à la plaque auxiliaire correspondante, et pourvue d'un tampon amortisseur (41) en caoutchouc ou en acier à ressorts.

6. Dispositif de paliers selon la revendication 5, caractérisé en ce qu'il comporte une plaque de montage (21) pourvue d'au moins un trou de fixation (23) pour fixer la plaque (21) à une paroi (19).

7. Dispositif de paliers selon l'une des revendications précédentes, caractérisé en ce que la plaque support (25) est pourvue d'un téton de retenue (28) pour immobiliser une plaquette de calage (34) en appui sur la plaque support.

8. Dispositif de paliers selon l'une des revendications 5 à 7, caractérisé en ce que les tampons amortisseurs (41) sont réglables en hauteur, au montage et en service.

FIG. 1

FIG. 2

FIG. 3

FIG. 4